# EUROPÄISCHE PATENTANMELDUNG

(11) **EP 4 335 298 A1**
(43) Veröffentlichungstag der Anmeldung: **13.03.2024**
(21) Anmeldenummer: 23193478.7
(22) Anmeldetag: 25.08.2023
(51) Int. Cl.: A23C 3/03, A23L 3/16

(54) **VERFAHREN UND VORRICHTUNG ZUR DIREKTEN ERHITZUNG VON FLÜSSIGEN NAHRUNGSMITTELPRODUKTEN**

(30) Priorität: 08.09.2022 DE 102022122826
(71) Anmelder: KRONES Aktiengesellschaft, 93073 Neutraubling (DE)
(72) Erfinder: Oehmichen, Thomas, 93073 Neutraubling (DE); Stefan, Hoeller, 93073 Neutraubling (DE); Ottmann, Norbert, 93073 Neutraubling (DE)
(74) Vertreter: Grünecker Patent- und Rechtsanwälte PartG mbB

(57) **Zusammenfassung**

Verfahren zur direkten Erhitzung von flüssigen Lebensmittelprodukten mittels Ultrahochtemperatur (UHT), umfassend ein Zuführen eines Lebensmittelprodukts in eine Erhitzungsvorrichtung, wobei das Lebensmittelprodukt beim Eintritt in die Erhitzungsvorrichtung eine Eintrittstemperatur hat; ein direktes Erhitzen des Lebensmittelprodukts von der Eintrittstemperatur auf die Behandlungstemperatur der Ultrahocherhitzung in der Erhitzungsvorrichtung, ein Flash-Kühlen des Lebensmittelprodukts von der Behandlungstemperatur auf eine Abkühltemperatur; wobei die Abkühltemperatur oberhalb der Eintrittstemperatur liegt.

## Beschreibung

Die Erfindung bezieht sich auf ein Verfahren und eine Vorrichtung zur direkten Erhitzung von flüssigen Lebensmittelprodukten.

Es ist bekannt, hitzeempfindliche flüssige Lebensmittelprodukte mittels UHT (Ultrahochtemperatur-Erhitzung) haltbar zu machen. Insbesondere ist es bekannt, Lebensmittelprodukte mittels direkter Erhitzung durch Dampf zu erhitzen und anschließend wieder durch Flash-Kühlen, also durch Abkühlen mit Unterdruck unter Abzug von Dampf, auf die ursprüngliche Temperatur abzukühlen. Dadurch bleibt der Wassergehalt des Produktes vor Erhitzung gleich dem Wassergehalt des Produktes nach der UHT-Behandlung. Eine direkte Erhitzung durch Dampf hat den Vorteil, dass die Lebensmittel schnell auf die benötigte Behandlungstemperatur erhitzt werden können und schnell wieder herabgekühlt werden können, wenn sie die benötigte Zeit heiß gehalten wurden. Beispielsweise zeigt die EP 2 536 290 B1 ein Verfahren und eine UHT Anlage zum Behandeln hitzeempfindlicher flüssiger Nahrungsmittelprodukte.

Da jedoch für eine UHT hohe Temperaturen erreicht werden müssen, sind die entsprechenden Verfahren sehr ressourcenintensiv. Der Erfindung liegt nun die Aufgabe zu Grunde, ein Verfahren und eine Vorrichtung sowie eine Abfüllanlage anzugeben, die die Ressourceneffizienz erhöhen, insbesondere eine verbesserte Energieeffizienz als die bekannten Verfahren und Vorrichtungen aufweisen.

Die Erfindung umfasst ein Verfahren nach Anspruch 1, eine Vorrichtung nach Anspruch 11 und eine Abfüllanlage nach Anspruch 16. Weitere Ausführungsformen sind in den abhängigen Ansprüchen beschrieben.

Das Verfahren zur direkten Erhitzung von flüssigen Lebensmittelprodukten, im Folgenden auch als Produkte bezeichnet, mittels Ultrahochtemperatur (UHT) umfasst ein Zuführen eines Lebensmittelproduktes in eine Erhitzungsvorrichtung, wobei das Lebensmittelprodukt beim Eintritt in die Erhitzungsvorrichtung eine Eintrittstemperatur hat. Typischerweise liegt diese Eintrittstemperatur bei ca. 80°C, beispielsweise zwischen 70°C und 90°C. Des Weiteren umfasst das Verfahren ein direktes Erhitzen des Lebensmittelproduktes von der Eintrittstemperatur auf die Behandlungstemperatur der Ultrahocherhitzung in der Erhitzungsvorrichtung. Das direkte Erhitzen kann insbesondere durch direktes Erhitzen durch Wasserdampf ausgeführt werden. Das direkte Erhitzen kann beispielsweise durch Dampfinfusion oder Dampfinjektion ausgeführt werden. Die Erhitzungsvorrichtung kann insbesondere einen Mischraum oder Dampfinfusionsbehälter umfassen oder als solcher ausgebildet sein, in dem sich Wasserdampf und Lebensmittelprodukt mischen können, sodass das Lebensmittelprodukt die Behandlungstemperatur erreicht. Die Behandlungstemperatur für UHT-Erhitzung kann insbesondere bei ca. 140°C, beispielsweise zwischen 130°C und 150°C liegen. Anschließend kann das Produkt optional über einen bestimmten Zeitraum auf der Behandlungstemperatur gehalten werden. Dabei kann es beispielsweise in einer Heißhaltestrecke, die optional an die Erhitzungsvorrichtung angeschlossen sein kann, heiß gehalten werden. Anschließend wird das Lebensmittelprodukt flash-gekühlt von der Behandlungstemperatur auf eine Abkühltemperatur. Flash-Kühlen (flash cooling), auch Entspannungskühlung, ist ein Kühlen durch Unterdruck. Es kann insbesondere ein Abziehen des Flash-Dampfes umfassen, und entzieht somit dem Lebensmittelprodukt gleichzeitig Wasser. Typischerweise liegt die Abkühltemperatur auf Höhe der Eintrittstemperatur. Somit wird beim Abkühlen dem Produkt genau die Menge an Dampf entzogen, die sich bei der Erhitzung im Produkt gelöst hat, also insbesondere wird das Produkt weder aufkonzentriert noch mit Dampf verdünnt.

Im Verfahren liegt nun die Abkühltemperatur nach dem Flash-Kühlen (im Folgenden auch: Abkühltemperatur) oberhalb der Eintrittstemperatur, insbesondere kann sie so oberhalb der Eintrittstemperatur liegen, dass eine Verdünnung des Produkts durch Dampf erfolgt. Dies hat den Vorteil, dass im Produkt nach dem Flash-Kühlen mehr Wärme verbleibt, die als Wärme in weiteren Prozessen verwendet werden kann. Zudem ist im Zusammenhang mit dem Flash-Kühlen, insbesondere dem Kondensator am Flash-Kühler, im verwendeten Kühlmittel, insbesondere Kühlwasser, und dem Kondensat ebenfalls mehr Wärme enthalten (da es eine höhere Temperatur erreicht), die dann wiederum weiterverwendet werden kann.

Die Abkühltemperatur nach dem Flash-Kühlen ist die Abkühltemperatur, die das Produkt unmittelbar nach dem Flash-Kühlen hat. Sie kann insbesondere die Temperatur am Austritt aus einem Flash-Kühler sein. Sie kann über einen kleinen Zeitraum (z.B. einige Sekunden) vom Austritt aus bzw. unmittelbar nach dem Flash-Kühler, insbesondere bis zu einer weiteren Abkühlung, z.B. in einem Wärmetauscher, beibehalten werden.

Die Abkühltemperatur kann mindestens 5°C, beispielsweise mindestens 10°C, insbesondere mindestens 15°C oberhalb der Eintrittstemperatur liegen. Bei einer Eintrittstemperatur von ca. 80°C kann somit die Abkühltemperatur bei mindestens 85°C, beispielsweise mindestens 90°C, insbesondere mindestens 95°C liegen.

Das Verfahren kann des Weiteren ein Vorwärmen des Lebensmittelproduktes vor dem Zuführen des Lebensmittelproduktes unter Verwendung der Wärme des Lebensmittelproduktes nach dem Flash-Kühlen umfassen. Hierbei kann das Lebensmittelprodukt insbesondere auf die Eintrittstemperatur vorgewärmt werden. Liegt nun die Abkühltemperatur wie beschrieben oberhalb der Eintrittstemperatur, kann das Lebensmittelprodukt insbesondere unter ausschließlicher Verwendung der Wärme des Lebensmittelproduktes nach den Flash-Kühlen auf die Eintrittstemperatur vorgewärmt werden. Dabei können beispielsweise, einer, zwei oder mehr Wärmetauscher verwendet werden.

Da die Temperatur des Lebensmittelproduktes nach dem Flash-Kühlen des Lebensmittelprodukts höher ist als die Eintrittstemperatur, kann das Verfahren ein Kühlen oder Reduzieren der Wärme des Lebensmittelproduktes oder aus dem Lebensmittelproduktes übernommenen Wärme, z.B. durch einen Kühler des Kühlmittels nach Übertrag der Wärme in ein Kühlmittel durch einen Wärmetauscher, umfassen, damit das Lebensmittelprodukt, das vorgewärmt werden soll, nicht auf eine höhere Temperatur als die Eintrittstemperatur vorgewärmt wird. Insbesondere kann das Kühlen beispielsweise durch einen Kühler durchgeführt werden, der in dem Wärmekreislauf zum Übertragen der Wärme des Lebensmittelproduktes nach dem Flash-Kühlen an ein Lebensmittelprodukt, das vorgewärmt werden soll, angeordnet ist und den Arm des Wärmekreislaufs kühlen kann, der Wärme vom Lebensmittelprodukt nach dem Flash-Kühlen an das Lebensmittelprodukt überträgt, das vorgewärmt werden soll. Alternativ ist es beispielsweise auch möglich, dass nur ein Teilstrom des Lebensmittelprodukts, welches vorgewärmt werden soll, in dem Wärmekreislauf zum Übertragen der Wärme des Lebensmittelproduktes nach dem Flash-Kühlen an ein Lebensmittelprodukt, erwärmt wird. Alternativ oder zusätzlich ist es ebenfalls möglich, nur einen Teilstrom des Lebensmittelprodukts nach dem Flash-Kühlen für die Wärmerückgewinnung zur Vorwärmung des Lebensmittelprodukts zu verwenden.

In einem solchen Verfahren kann das in die Erhitzungsvorrichtung zugeführte Lebensmittelprodukt weniger Wasser enthalten als das fertige Lebensmittelprodukt, wobei der Wassergehalt des fertigen Lebensmittelprodukts dem Wassergehalt des Lebensmittelproduktes nach dem Flash-Kühlen entsprechen kann. Somit kann ein Teil des zum direkten Erhitzen verwendeten Wasserdampf als Wasser im Lebensmittelprodukt verbleiben. Solche Verfahren eignet sich insbesondere für alle Lebensmittel, die unter Zugabe von Wasser angemischt werden, deren Wassergehalt also individuell einstellbar ist, also beispielsweise Lebensmittelprodukte, die aus Konzentrat oder Pulver angemischt werden. Es kann somit beispielsweise Anwendung finden für pflanzenbasierte Lebensmittelprodukte wie beispielsweise Hafermilch, Sojamilch, und Mandelmilch, aus Konzentrat angemischte Produkte, milchbasierte Produkte, Produkte, die aus Milchpulver hergestellt oder aus Milch ausgemischt werden sowie Produktsorten, welche aus Trockenmasse ausgemischt werden. Beispielsweise kann bei einer Temperaturdifferenz von 15°C zwischen Abkühltemperatur und Eintrittstemperatur der Wassergehalt des Produkts nach dem Erhitzen zwischen 2,5% und 4,5 % höher liegen als der Wassergehalt der Infusion (des Produktes vor dem Erhitzen, z.B. vor dem Eintritt in die Erhitzungsvorrichtung).

Optional kann das Verfahren ein Abfüllen des fertigen Lebensmittelproduktes umfassen.

Die im folgenden beschriebenen Verfahrensschritte können alle in den oben beschriebenen Verfahren zur Anwendung kommen, in dem die Abkühltemperatur wie beschrieben über der Eintrittstemperatur liegt. Zusätzlich umfasst die Erfindung auch Verfahren mit den zuvor beschriebenen Merkmalen, bei denen allerdings die Abkühltemperatur nicht über der Eintrittstemperatur liegt, sondern Eintrittstemperatur und Abkühltemperatur gleich sind oder die Abkühltemperatur niedriger als die Eintrittstemperatur ist, mit den im folgenden beschriebenen Merkmalen.

Das Verfahren kann umfassen, dass Wärme des Lebensmittelproduktes nach dem Flash-Kühlen und/oder die Wärme vom Flash-Kühlen in, insbesondere dem Verfahren zum Erhitzen des Produktes vorgelagerten, Produktbehandlungsschritten oder weiteren Prozessschritten verwendet wird. Solche weiteren Prozessschritte können insbesondere angrenzende oder zusammengehörige Prozessschritte wie beispielsweise ein Reinigen der entsprechenden Anlage, eine Energieversorgung oder Wärmeversorgung von angrenzenden Anlagen, Produktbehandlungsschritte oder ähnliche Schritte umfassen. Beispielsweise kann zum Einmaischen eines Produktes Wärme des Lebensmittelpunktes nach dem Flash-Kühlen und/oder Wärme vom Flash-Kühlen Einsatz finden. Wärme vom Flash-Kühlen kann insbesondere Kondensationswärme (Wärme) aus dem Kühlmittel, insbesondere Kühlwasser, des Kondensators und/oder Wärme aus dem Kondensat umfassen. Dies kann zu einem weiteren Sinken des Primärenergiebedarfs für die Herstellung des fertigen Produktes führen.

In dem Verfahren kann Wärme vom Flash-Kühlen und/oder vom Lebensmittelprodukt nach dem Flash-Kühlen alternativ oder zusätzlich zwischengespeichert werden, insbesondere zu einer späteren Verwendung. Dies kann insbesondere dann vorteilhaft sein, wenn der Energiebedarf von vorgelagerten Produktbehandlungsschritten oder weiteren Prozessschritten sich zeitlich vom Anfall der Wärme unterscheidet. Beispielsweise kann die Wärme in einem Wärmespeicher zwischengespeichert werden, wobei der Wärmespeicher beispielsweise ein Schichtspeicher oder Konstant-Temperatur-Wärmespeicher sein kann.

In dem Verfahren kann des Weiteren umfasst sein, dass Wärme, insbesondere vom Flash-Kühlen und/oder vom Produkt nach dem Flash-Kühlen, unter Verwendung einer (Hochtemperatur-)Wärmepumpe auf eine höhere Temperatur, insbesondere eine höhere Temperatur als die Abkühltemperatur, gebracht wird. Insbesondere kann, z.B. durch eine (Hochtemperatur-)Wärmepumpe, Kühlmittel aus einem Wärmetauscher, der Wärme vom Flash-Kühler und/oder dem Produkt nach dem Flash-Kühlen übernimmt, auf eine höhere Temperatur, insbesondere eine höhere Temperatur als die Abkühltemperatur, gebracht werden. Somit kann durch die Wärmepumpe die Wärme bei einer Temperatur nutzbar gemacht werden, in der sie für Vorbehandlungsschritte effizienter eingesetzt werden kann.

Wärme, insbesondere vom Flash-Kühlen, kann in dem Verfahren als Wärmequelle oder als Wärmesenke einer Wärmepumpe verwendet werden.

Beispielsweise kann Kondensationswärme aus dem Kühlmittel des Kondensators als Wärmequelle einer Wärmepumpe verwendet werden. Dadurch kann eine effektive Kühlung des Kühlmittels erreicht werden, um dieses wieder für die Kondensation im Kondensator verwenden zu können. Optional kann ergänzend ein zusätzlicher Kühler der Wärmequelle der Wärmepumpe nachgeschaltet werden, insbesondere um die erforderliche Eintrittstemperatur des Kühlmittels in den Kondensator bereit zu stellen. Die Wärmesenke der Wärmepumpe kann verwendet werden, um einen Wärmespeicher beispielsweise einen Schichtspeicher oder Konstant-Temperatur-Wärmespeicher, welcher insbesondere energetisch oder fluidisch mit der Erhitzungsvorrichtung verbunden sein kann, auf ein höheres Temperaturniveau zu bringen. Beispielsweise kann ein Teilstrom aus dem Wärmespeicher abgezweigt werden und der Wärmesenke der Wärmepumpe zugeführt werden und wieder in den Wärmespeicher zurückgeführt werden.

Die Kondensationswärme aus dem Kühlmittel des Kondensators kann als Wärmesenke einer Wärmepumpe verwendet werden. Dadurch kann eine effektive Erwärmung des Wärmestroms erreicht werden. Der so erwärmte Wärmestrom kann beispielsweise einem Wärmespeicher, beispielsweise einen Schichtspeicher oder Konstant-Temperatur-Wärmespeicher, zugeführt werden. Der Wärmestrom kann, insbesondere nach Speicherung in einem Wärmespeicher oder ohne Zwischenspeicherung, Prozessen zur Verfügung gestellt werden, die ein höheres Temperaturniveau erfordern. Die Wärmequelle der Wärmepumpe kann mit einem Rücklauf aus dem Wärmespeicher verbunden sein und das darin befindliche Wärmeträgermedium abkühlen, welches wieder als Kühlmedium im Kondensator Verwendung finden kann. Optional kann ergänzend ein zusätzlicher Kühler der Wärmequelle der Wärmepumpe nachgeschaltet werden, um die erforderliche Eintrittstemperatur des Wärmeträgermediums bereit zu stellen.

Das Verfahren kann zusätzlich oder alternativ umfassen, dass beim Flash-Kühlen Flash-Dampf nicht nur abgezogen wird, sondern ein Kondensat des abgeführten Flash-Dampfes gewonnen wird. Dieses Kondensat kann anschließend genutzt werden, beispielsweise für einen Reinigungsschritt. Die Reinigungsschritte können insbesondere Reinigungsschritte von Clean-In-Place (CIP) Verfahren sein, also Reinigungsschritte, die an der entsprechenden Anlage mit Zeitverzögerung zum Herstellung des Lebensmittelprodukts durchgeführt werden. Das Kondensat kann insbesondere als Wärmequelle und/oder als Medium für einen Reinigungsschritt genutzt werden. Flash-Dampf muss zwangsläufig Lebensmittelqualität aufweisen, sodass eine Verwendung in Reinigungsschritten unter diesem Aspekt unproblematisch ist, er kann aber Produktbeimischungen enthalten.

Beispielsweise kann das Kondensat als Medium in einen Reinigungstank eingeleitet werden, insbesondere beispielsweise zum Einstellen einer gewünschten Reinigungsmitteldosierung, oder zum Auffüllen eines Tanks, insbesondere eines Wassertanks, Reinigungsmitteltanks oder eines Lauge- oder Säuretanks. Dies kann zu einem geringeren Verbrauch von Wasser führen und gleichzeitig in dem Kondensat noch vorhandene Wärme nutzen, weil der entsprechende Reinigungstank nicht so stark erwärmt werden muss. Beispielsweise kann Kondensat in den Laugetank hinzugefügt werden. Ein Hinzufügen in Laugetank kann deswegen vorteilhaft sein, da dann eine eventuell vorhandene Verschmutzung des Kondensats durch Produktreste keine nachteiligen Wirkungen hat. In anderen Beispielen kann das Kondensat vor dem Zuführen in einen Tank gereinigt werden, um Produktrückstände zu entfernen, beispielsweise durch Filtrationsverfahren wie z.B. Mikrofiltration, Ultrafiltration oder Aktivkohlefiltration.

Alternativ oder zusätzlich kann Wärme aus dem Produkt nach dem Flash-Kühlen und/oder Wärme vom Flash-Kühlen, insbesondere aus dem zum Erzeugen des Kondensats verwendeten Kühlmittels, insbesondere Kühlwassers, oder Wärme aus dem Kondensat, für die Erwärmung von Reinigungstanks verwendet werden, beispielsweise über einen oder mehrere Wärmetauscher einem oder mehreren Tanks zugeführt werden.

Beispielsweise können die Reinigungstanks damit vorgewärmt werden, oder auf Temperatur gehalten werden. Je mehr Wärme sich in dem Kühlmittel, insbesondere Kühlwasser, oder dem Kondensat befindet, desto einfacher können solche Tanks auf Temperatur gehalten werden. Beispielsweise können Säuretanks, die normalerweise nur Temperaturen von ca. 40°C aufweisen müssen, durch die Wärme aus dem Kühlmittel, insbesondere Kühlwasser, und/oder dem Kondensat vollständig auf die gewünschte Temperatur erwärmt werden und dort gehalten werden. Laugentanks, die typischerweise bei einer Temperatur von ca. 80°C sein müssen, können beispielsweise bei einer Austrittstemperatur von ca. 80° normalerweise nicht vollständig durch die Wärme erwärmt werden. Liegt aber, wie nun in einigen Beispielen, die Abkühltemperatur deutlich darüber, kann in einigen Fällen auch der Laugetank vollständig durch die Wärme aus dem Produkt nach dem Flash-Kühlen und/oder der Wärme vom Flash-Kühlen erwärmt werden.

Die Erfindung umfasst des Weiteren eine Vorrichtung zum Durchführen eines Verfahrens zur direkten Erhitzung von flüssigen Lebensmittelprodukten, insbesondere einem zuvor beschriebenen Verfahren. Die Vorrichtung umfasst eine Produktzuführung zu einer Erhitzungsvorrichtung, beispielsweise in der Form von Rohrleitungen, die ein Lebensmittelprodukt zur Erhitzungsvorrichtung führen können. Sie umfasst des Weiteren eine Erhitzungsvorrichtung zum direkten Erhitzen des Lebensmittelprodukts von der Eintrittstemperatur auf die Behandlungstemperatur zu Ultrahocherhitzung, sowie einen Flash-Kühler zum Flash-Kühlen des Lebensmittelproduktes von der Behandlungstemperatur auf eine Abkühltemperatur nach dem Flash-Kühlen, sowie eine Produktabführung vom Flash-Kühler, beispielsweise in Form von Rohrleitungen. Die Vorrichtung umfasst des Weiteren eine Steuerung, die die Durchführung des Verfahrens steuert, so dass die Abkühltemperatur oberhalb der Eintrittstemperatur liegt, insbesondere so oberhalb der Eintrittstemperatur liegt, dass eine Verdünnung des zugeführten Lebensmittelproduktes durch Dampf erfolgt.

Die im folgenden beschriebenen Vorrichtungsmerkmale können in einer zuvor beschriebenen Vorrichtung umfasst sein. Die Erfindung umfasst jedoch auch Vorrichtungen, in denen die zuvor beschriebene Steuerung, die die Durchführung des Verfahrens steuert, so dass die Abkühltemperatur wie beschrieben oberhalb der Eintrittstemperatur liegt, nicht umfasst sein muss, also die Abkühltemperatur auch bei oder unterhalb der Eintrittstemperatur liegen kann, aber eines oder mehrere der im Folgenden beschriebenen Vorrichtungsmerkmale umfasst sind.

Die Vorrichtung kann einen Kreislauf zur Wärmerückgewinnung umfassen, der zur Wärmerückgewinnung von der Produktabführung und zur Überführung der Wärme in die Produktzuführung angeordnet ist. Der Kreislauf kann insbesondere einen, zwei oder mehr Wärmetauscher und optional ein Kreislaufmedium umfassen, das zwischen zwei oder mehr Wärmetauschern zirkuliert. Optional kann in dem Kreislauf ein Kühler zur Kühlung des Kreislaufmediums auf dem Weg von der Produktzuführung zur Produktabführung und/oder ein Kühler zur Kühlung des Kreislaufmediums auf dem Weg von der Produktabführung zu Produktzuführung umfasst oder angeordnet sein.

Die Vorrichtung kann zudem einen Kondensator zum Kondensieren des Flash-Dampfes umfassen. Die Vorrichtung kann so ausgebildet sein, dass die Wärme vom Lebensmittelprodukt nach dem Flash-Kühlen und/oder Wärme vom Flash-Kühlen in der Vorrichtung zur späteren Verwendung zwischengespeichert werden kann, beispielsweise in einem optional von der Vorrichtung umfassten Wärmespeicher. Wärme vom Flash-Kühlen kann insbesondere Wärme vom Kondensator, insbesondere im Kühlmittel, insbesondere Kühlwasser, des Kondensators, das zum Erzeugen des Kondensats verwendet wird, und/oder Wärme aus dem Kondensat umfassen. Ein optional von der Vorrichtung umfasster Wärmespeicher kann insbesondere ein Schichtspeicher oder Konstanttemperatur-Wärmespeicher sein oder einen solchen umfassen. Die Vorrichtung kann eine Steuerung umfassen, die die Vorrichtung so steuert, dass wie zuvor beschrieben die Wärme von Produkt nach dem Flash-Kühlen und/oder Wärme vom Flash-Kühlen zur späteren Verwendung zwischengespeichert wird.

Die Vorrichtung kann eine (Hochtemperatur-)Wärmepumpe umfassen. Die Wärmepumpe kann beispielsweise dazu ausgebildet sein, Wärme auf eine höhere Temperatur zu bringen. Insbesondere kann die Wärmepumpe dazu ausgebildet und angeordnet sein, die Wärme vom Produkt nach dem Flash-Kühlen und/oder die Wärme vom Flash-Kühler auf eine höhere Temperatur, insbesondere eine höhere Temperatur als die Abkühltemperatur, zu bringen. Sie kann beispielsweise so angeordnet sein, dass sie Kühlmittel eines Wärmetauschers, der Wärme vom Flash-Kühler und/oder dem Produkt nach dem Flash-Kühlen übernimmt, auf eine höhere Temperatur, insbesondere eine höhere Temperatur als die Abkühltemperatur, bringen kann.

Die Vorrichtung kann eine Wärmepumpe umfassen, die so ausgebildet und angeordnet ist, dass Wärme, insbesondere vom Flash-Kühlen, als Wärmequelle verwendet werden kann. Alternativ kann die Vorrichtung eine Wärmepumpe umfassen, die so ausgebildet und angeordnet ist, dass Wärme, insbesondere vom Flash-Kühlen, als Wärmesenke der Wärmepumpe verwendet werden kann.

Beispielsweise kann eine Wärmepumpe so angeordnet sein, dass Kondensationswärme aus dem Kühlmittel des Kondensators als Wärmquelle der Wärmepumpe verwendet werden kann. Damit kann das Kühlmittel effektiv gekühlt werden, damit dieses wieder für die Kondensation im Kondensator verwendet werden kann. Optional kann zusätzlich ein Kühler in der Vorrichtung umfasst sein, der der Wärmequelle der Wärmepumpe nachgeschaltet ist. Mit diesem kann insbesondere das Kühlmittel so gekühlt werden, dass es die für das Kühlen des Kondensators erforderliche Eintrittstemperatur aufweist. Die Wärmepumpe kann so ausgebildet und angeordnet sein, dass die Wärmesenke der Wärme verwendet werden kann, um einen Wärmespeicher, insbesondere einen Schichtspeicher oder Konstant-Temperatur-Wärmespeicher, der insbesondere energetisch oder fluidisch mit der Erhitzungsanlage verbunden sein kann, auf ein höheres Temperaturniveau zu bringen. Beispielsweise kann die Wärmepumpe so ausgebildet und angeordnet sein, dass ein Teilstrom aus dem Wärmespeicher abgezweigt, der Wärmesenke der Wärempumpe zugeführt und wieder in den Wärmespeicher zurückgeführt wird.

Alternativ kann eine Wärmepumpe so angeordnet sein, dass Kondensationswärme aus dem Kühlmittel des Kondensators als Wärmesenke der Wärmepumpe verwendet werden kann. Dadurch kann eine effektive Erwärmung des Wärmestroms erreicht werden. Der erwärmte Wärmestrom kann beispielsweise einen Wärmespeicher, insbesondere einen Schichtspeicher oder Konstant-Temperatur-Wärmespeicher, zugeführt werden. Der Wärmestrom kann, insbesondere nach Speicherung in einem Wärmespeicher oder ohne Zwischenspeicherung, Prozessen zu Verfügung gestellt werden, die ein höheres Temperaturniveau erfordern. Die Wärmequelle der Wärmepumpe kann mit einem Rücklauf aus dem Wärmespeicher verbunden sein. Somit kann das darin befindliche Wärmeträgermedium abgekühlt werden, welches wieder als Kühlmedium im Kondensator verwendet werden kann. Optional kann ergänzend ein zusätzlicher Kühler der Wärmequelle der Wärmepumpe nachgeschaltet angeordnet sein, um die erforderliche Eintrittstemperatur des Wärmeträgermediums bereit zu stellen.

Die Vorrichtung kann ein oder mehrere Tanks eines Reinigungssystems, insbesondere eines Clean-In-Place (CIP) Systems umfassen. Optional kann die Vorrichtung ein Verbindungsmittel umfassen, mit dem Kondensat aus dem Kondensator in einen Tank des Reinigungssystems geführt werden kann. Alternativ oder zusätzlich kann die Vorrichtung ein Verbindungsmittel umfassen, das eine Wärmerückgewinnung aus dem Produkt nach dem Flash-Kühlen und/oder vom Flash-Kühler ermöglicht. Insbesondere kann das Verbindungsmittel eine Wärmerückgewinnung von dem Kondensator, insbesondere aus dem Kühlmittel, insbesondere Kühlwassers, das das Kondensat kühlt, und/oder aus dem Kondensat, und eine Übertragung der Wärme an einen oder mehrere Tanks ermöglichen.

Optional kann die Vorrichtung noch weitere Bauteile, beispielsweise einen Kühlturm zum Kühlen des Kühlmittels, insbesondere Kühlwassers, am Einlauf des Kondensators oder Ähnliches umfassen.

Die Erfindung umfasst des Weiteren eine Abfüllanlage zum Abfüllen von einem flüssigen Lebensmittelprodukt, das einen Abfüller für ein fertiges Lebensmittelprodukt sowie eine dem Abfüller vorgelagerte Vorrichtung wie zuvor beschrieben umfasst.

Weitere Aspekte der Erfindung werden in den folgenden schematischen, nicht zwangsläufig maßstabsgetreuen, Figuren beschrieben. Hierbei zeigt
- Figur 1: eine beispielhafte Vorrichtung,
- Figur 2: einen Ausschnitt einer beispielhaften Vorrichtung,
- Figur 3: einen Ausschnitt einer beispielhaften Vorrichtung,
- Figur 4: beispielhafte Schritte eines Verfahrens.

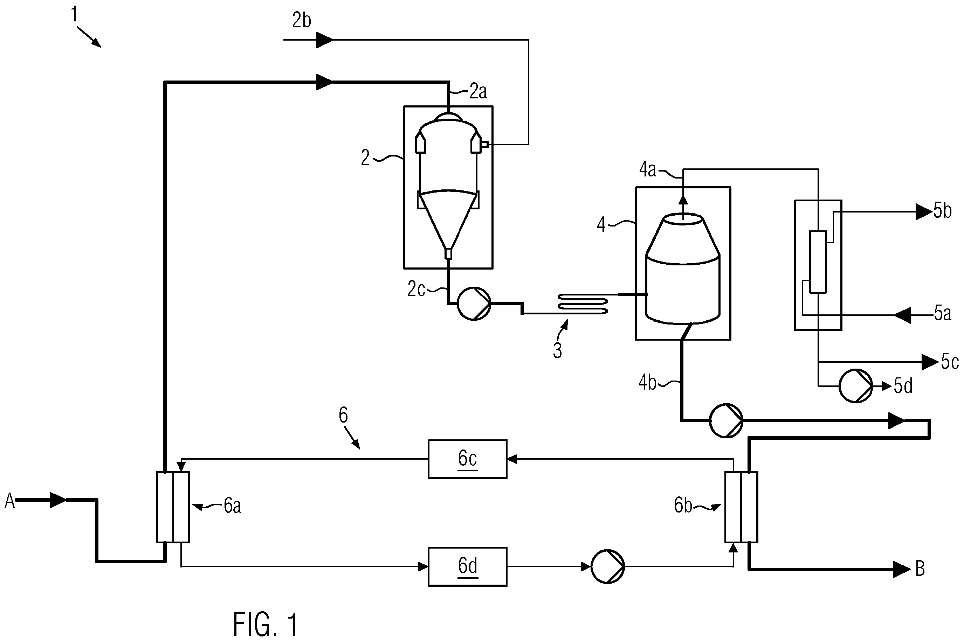

Figur 1 zeigt eine beispielhafte Vorrichtung 1, die einen beispielhaft als Dampfinfusionsbehälter ausgebildete Erhitzungsvorrichtung 2 sowie einen Flash-Kühler 4 umfasst. Die Erhitzungsvorrichtung 2 wird aus Quelle A mit einem Produkt durch Produktzulauf 2a sowie mit Dampf aus Dampfzulauf 2b versorgt. Das Produkt kann auf seinem Weg von Quelle A zum Produktzulauf 2a durch eine Produktzuführung, beispielsweise in Form von Rohrleitungen, geführt werden. In der Erhitzungsvorrichtung wird das Produkt durch den zugeführten Dampf direkt erhitzt auf die Behandlungstemperatur. Anschließend wird das nun erhitzte Produkt durch Produktauslass 2c der Erhitzungsvorrichtung durch eine optional vorhandene Heißhaltestrecke 3 zum Flash-Kühler 4 befördert, wo es von der Behandlungstemperatur auf die Abkühltemperatur abgekühlt wird.

Flash-Kühler 4 ist hier beispielhaft über Kondensator 5 an eine Vakuumpumpe 5d angeschlossen. Über Verbindungsmittel 4a wird Dampf aus dem Flash-Kühler in den Kondensator 5 abgezogen und dort durch Kühlmittel, insbesondere Kühlwasser, auskondensiert. Das resultierende Kondensat kann durch Kondensatablauf 5c abgeführt werden. Der Einlauf für das Kühlmittel ist mit 5a, der Auslauf für das Kühlmittel ist mit 5b bezeichnet.

Das nach dem Flash-Kühlen im Flash-Kühler 4 abgekühlte Produkt wird durch Produktauslass 4b aus dem Flash-Kühler, insbesondere durch eine, z.B. als Rohrleitung, ausgebildete Produktabführung, weiterbefördert und wird dann in Richtung B, beispielsweise zu einem optionalen Pufferspeicher und/oder einem optionalen Abfüller, befördert.

In dem gezeigten Beispiel ist optional ein Kreislauf 6 zur Wärmerückgewinnung von dem Produkt nach dem Flash-Kühlen zum Vorwärmen des Produkts vor Zuführung in die Erhitzungsvorrichtung eingezeichnet. Insbesondere wird dabei durch einen Wärmetauscher 6b aus dem Produkt nach dem Flash-Kühler Wärme rückgewonnen und über einen zweiten Wärmetauscher 6a in das Produkt vor dem Zuführen in die Erhitzungsvorrichtung überführt. Ebenfalls in dem Kreislauf eingezeichnet sind zwei optionale Kühler 6c und 6d. Kühler 6d dient dem Kühlen des Kühlmittels des Wärmekreislaufs, so dass das Produkt durch den Wärmetauscher 6b auf eine für den Puffertank und/oder eine Abfüllanlage benötigte Temperatur gekühlt werden kann. Alternativ kann der Kühler 6d auch im produktseitigen Ausgang des Wärmetauschers 6b in Richtung B angeordnet sein. Dadurch kann im Kühler 6d ein anderes Wärmeübertragungsmedium eingesetzt werden, als dies im Kreislauf 6 verwendet wird (nicht gezeigt). Kühler 6c dient einer durch die höhere Abkühltemperatur möglicherweise notwendigen Kühlung, damit das Produkt in Wärmetauscher 6a nicht auf eine höhere Temperatur als die Zuführtemperatur erwärmt wird. Alternativ oder ergänzend kann nach oder vor dem Kühler 6c ein Erhitzer angeordnet sein (nicht gezeigt). Dies kann beispielsweise sinnvoll sein, falls die Energie des abzukühlenden Produkts nicht ausreichend ist, um das vorzuwärmende Produkt vollständig vorzuwärmen.

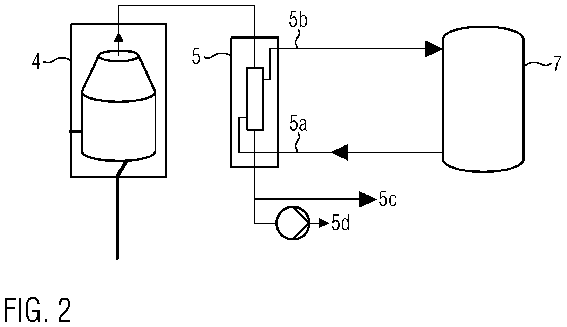

Figur 2 zeigt einen schematischen Ausschnitt einer Vorrichtung, insbesondere des Teils der Vorrichtung am Flash-Kühler 4. Der gezeigte Teil kann in der Vorrichtung gemäß Figur 1 Anwendung finden, allerdings auch in anderen Vorrichtungen. In Figur 2 ist in der Vorrichtung ein Kondensator 5 umfasst, über den der Flash-Kühler 4 an eine Vakuumpumpe 5d angeschlossen ist und in dem aus dem abgezogenen Flash-Dampf ein Kondensat erzeugt wird, das über Kondensatablauf 5c abgeführt werden kann. Bei dem Kondensator kann es sich um einen indirekten Kondensator handeln, bei dem der zu kondensierende Dampf und das Kühlmittel durch eine Trennwand, wie z.B. eine Platte oder Rohr, getrennt voneinander geführt werden. Bei dem Kondensator kann es sich aber auch um einen direkten Kondensator (z.B. Sprühkondensator) handeln, bei dem das Kühlmittel und der zu kondensierende Dampf direkt miteinander in Kontakt gebracht werden.

Das Kühlmittel zum Kühlen des Flash-Dampfs, insbesondere zum Beispiel Kühlwasser, wird durch Einlauf 5a für Kühlmittel zugeführt und durch Ablauf 5b für Kühlmittel abgeführt. Die Vorrichtung ist so ausgebildet, dass Wärme vom Kondensator, in diesem Fall beispielhaft Wärme aus dem Kühlmedium, das zum Kühlen des Flash-Dampfes verwendet wird, zwischengespeichert wird. Insbesondere ist in dem Beispiel ein optionaler Wärmespeicher 7 gezeigt, in dem die Wärme vom Kondensator gespeichert werden kann. Die Wärmespeicherung kann direkt, über einen Wärmetauscher oder in anderer Weise erfolgen. Der Wärmespeicher 7 kann beispielsweise als Schichtspeicher oder Konstant-Temperatur-Wärmespeicher ausgebildet sein oder einen solchen umfassen. Ein Schichtspeicher hat den Vorteil, dass in horizontaler Schichtung verschiedene Temperaturen bereitgestellt werden können. Je nach benötigter Wärmemenge kann auf die geeignete Schicht zugegriffen werden. Beispielsweise kann kaltes Kühlmittel aus einer der unteren Schichten des Schichtenspeichers zum Kondensator zurückgeführt werden. Somit kann der Kältebedarf des Kondensators zumindest teilweise besonders energieeffizient bereitgestellt werden. Alternativ oder zusätzlich kann kaltes Kühlmittel aus einem Kältespeicher entnommen werden und dem Kondensator zugeführt werden, welcher energetisch und/oder fluidisch mit dem Wärmespeicher verbunden sein kann.

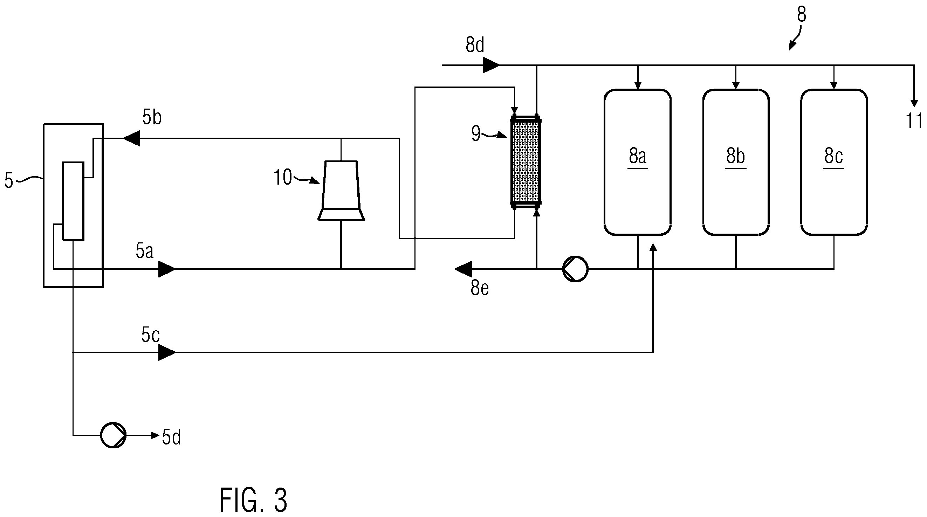

Figur 3 zeigt einen alternativen Ausschnitt einer Vorrichtung, wie er beispielsweise in einer Vorrichtung aus Figur 1 verwendet werden kann. Insbesondere ist dort statt einer Zwischenspeicherung der Wärme vom Kondensator eine Vorrichtung gezeigt, die beispielhaft drei Tanks 8a, 8b, 8c eines Reinigungssystems 8, umfasst, das insbesondere als CIP System ausgebildet sein kann. Das Reinigungssystem hat beispielhaft einen Reinigungsauslauf 8e und einen Reinigungsrücklauf 8d, die jeweils wie gezeigt mit allen Tanks 8a, 8b, 8c verbunden sein können. Alternativ kann eine Vorrichtung auch mehrere Reinigungsausläufe und Reinigungsrückläufe umfassen, die nicht mit allen Tanks verbunden sein müssen (nicht gezeigt). Zudem gibt es einen optional vorhandenen Ablauf für Reinigungsmittel 11, der vom Reinigungssystem umfasst sein kann.

In der beispielhaft gezeigten Vorrichtung wird Wärme vom Kondensator, insbesondere Wärme aus dem zum Kühlen des Kondensators verwendeten Kühlmittel, insbesondere Kühlwasser, mittels eines Wärmetauschers 9 an das Reinigungssystem, insbesondere ein oder mehrere Tanks des Reinigungssystems, übertragen. Somit kann mit der Wärme insbesondere einer oder mehrere der Tanks vorgewärmt oder sogar auf Betriebstemperatur gebracht werden.

Optional kann die Vorrichtung auch weitere Kühlmittel, wie beispielsweise ein Beispiel des gezeigten Kühlturm 10, umfassen um das Kühlmittel für den Kondensator auf die benötigte Temperatur zur Kondensation des Flash-Dampfs zu bringen.

Alternativ oder zusätzlich kann in der Vorrichtung auch, wie gezeigt, das Kondensat über Kondensatablauf 5c in einen Tank für die Reinigung geführt werden. Es kann somit insbesondere als Medium für die Reinigung verwendet werden. Im gezeigten Beispiel wird das Kondensat in Tank 8a, der insbesondere Laugentank sein kann, als Medium zugeführt. Somit kann sowohl das Medium des Kondensats wiederverwendet werden (so dass nicht frisches Wasser für die Reinigung verwendet werden muss), als auch die im Kondensat verbleibende Wärme im Reinigungssystem genutzt werden. Durch die gezeigte Anordnung wird somit Energie und Wasser gespart.

Der in Figur 3 gezeigte Ausschnitt kann auch in Kombination mit der in Figur 2 gezeigten Anordnung verwendet werden, z.B. indem über Wärmetauscher 9 auch ein Übertrag von Wärme in einen Energiespeicher, der zusätzlich parallel zu den Tanks 8a, 8b, 8c angeordnet ist, stattfinden kann (nicht gezeigt).

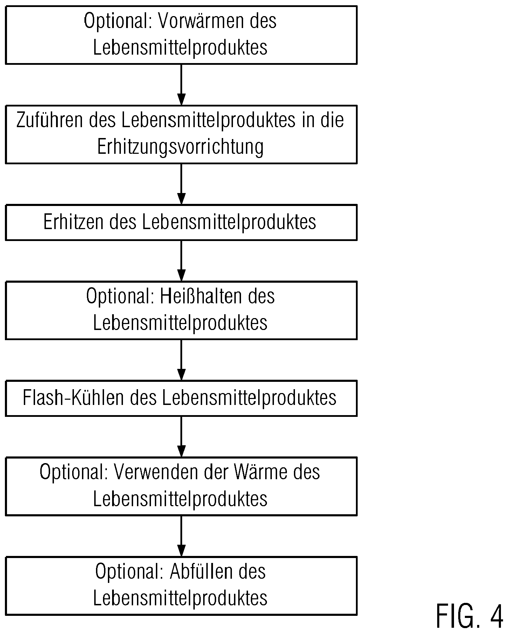

Figur 4 zeigt beispielhaft Schritte eines zuvor beschriebenen Verfahrens. Optional kann das Verfahren ein Vorwärmen des Lebensmittelproduktes, insbesondere unter Verwendung der Wärme des Lebensmittelproduktes nach dem Flash-Kühlen, umfassen. Anschließend wird das Lebensmittelprodukt in die Erhitzungsvorrichtung mit einer Zuführtemperatur zugeführt und dort von der Zuführtemperatur auf die Behandlungstemperatur der UHT erhitzt. Die Heizung erfolgt durch direkte Erhitzung, also direkten Wärmeeintrag über Dampf in das Lebensmittelprodukt. Optional schließt sich ein Heißhalten des Lebensmittelproduktes, beispielsweise in einer Heißhaltestrecke, an. Anschließend wird das Lebensmittelprodukt in einem Flash-Kühler flash-gekühlt, d.h. das Lebensmittelprodukt wird unter Unterdruck abgekühlt. Dabei kann insbesondere Flash-Dampf abgeführt werden. Hierbei kann insbesondere weniger Flash-Dampf abgeführt werden als in der Erhitzungsvorrichtung zugeführt wurde, so dass die Abkühltemperatur des Produkts nach Durchlaufen durch den Flash-Kühler über der Zuführtemperatur liegt, insbesondere beispielsweise so, dass eine Verdünnung des zugeführten Lebensmittelproduktes durch Dampf erfolgt.

Somit kann insgesamt im Erhitzungs- und Abkühlungsschritt zusätzlich Wasser im Lebensmittelprodukt verbleiben. Dies sollte insbesondere bei der Anmischung des Produktes berücksichtigt werden, so dass das zur Erhitzungsvorrichtung zugeführte Produkt einen niedrigeren Wassergehalt als das beabsichtigte fertige Endprodukt aufweisen sollte.

Den optionalen Schritt des Verwendens der Wärme des Lebensmittelproduktes, die insbesondere eingespeichert werden kann oder, wie zuvor beschrieben, für das Vorwärmen des Lebensmittelprodukts verwendet werden kann, ist ebenfalls in Figur 5 gezeigt. Optional umfasst das Verfahren auch noch den Schritt des Abfüllens des fertigen Lebensmittelproduktes. Das fertige Lebensmittelprodukt kann insbesondere den gleichen Wassergehalt aufweisen wie das Lebensmittelprodukt nach dem Flash-Kühlen.

## Patentansprüche

1. Verfahren zur direkten Erhitzung von flüssigen Lebensmittelprodukten mittels Ultrahochtemperatur (UHT), umfassend
- ein Zuführen eines Lebensmittelprodukts in eine Erhitzungsvorrichtung, wobei das Lebensmittelprodukt beim Eintritt in die Erhitzungsvorrichtung eine Eintrittstemperatur hat;
- ein direktes Erhitzen des Lebensmittelprodukts von der Eintrittstemperatur auf die Behandlungstemperatur der Ultrahocherhitzung in der Erhitzungsvorrichtung,
- ein Flash-Kühlen des Lebensmittelprodukts von der Behandlungstemperatur auf eine Abkühltemperatur nach dem Flash-Kühlen;
wobei das Verfahren **dadurch gekennzeichnet ist, dass** die Abkühltemperatur oberhalb der Eintrittstemperatur liegt.

2. Verfahren nach Anspruch 1, wobei die Abkühltemperatur mindestens 5°C, insbesondere mindestens 10°C, insbesondere mindestens 15°C oberhalb der Eintrittstemperatur liegt.

3. Verfahren nach Anspruch 1 oder Anspruch 2, des Weiteren umfassend ein Vorwärmen des Lebensmittelproduktes vor dem Zuführen des Lebensmittelproduktes, insbesondere ein Vorwärmen des Lebensmittelproduktes auf die Eintrittstemperatur, unter Verwendung der Wärme des Lebensmittelproduktes nach dem Flash-Kühlen.

4. Verfahren nach einem der vorhergehenden Ansprüche, wobei das in die Erhitzungsvorrichtung zugeführte Lebensmittelprodukt weniger Wasser enthält als das fertige Lebensmittelprodukt und der Wassergehalt des fertigen Lebensmittelproduktes dem Wassergehalt des Lebensmittelprodukts nach dem Flash-Kühlen entspricht, wobei das Verfahren optional des Weiteren ein Abfüllen des fertigen Lebensmittelproduktes umfasst.

5. Verfahren nach einem der vorhergehenden Ansprüche, wobei Wärme des Lebensmittelproduktes nach dem Flash-Kühlen und/oder die Wärme vom Flash-Kühlen in, insbesondere dem Verfahren zum Erhitzen des Produktes vorgelagerten, Produktbehandlungsschritten oder weiteren Prozessschritten verwendet wird.

6. Verfahren nach einem der vorhergehenden Ansprüche 1-5, wobei Wärme vom Lebensmittelprodukt nach dem Flash-Kühlen und/oder vom Flash-Kühlen zwischengespeichert wird zur späteren Verwendung, insbesondere in einem Wärmespeicher.

7. Verfahren nach einem der vorhergehenden Ansprüche, wobei Wärme, insbesondere vom Flash-Kühlen, unter Verwendung einer Wärmepumpe auf eine höhere Temperatur, insbesondere eine höhere Temperatur als die Abkühltemperatur gebracht wird.

8. Verfahren nach einem der vorhergehenden Ansprüche, wobei beim Flash-Kühlen ein Kondensat des abgeführten Flash-Dampfes gewonnen wird und das Kondensat für einen Reinigungsschritt genutzt wird, insbesondere als Wärmequelle und/oder als Medium.

9. Verfahren nach Anspruch 8, wobei das Kondensat als Medium in einen Reinigungstank eingeleitet wird.

10. Verfahren nach Anspruch 8 oder Anspruch 9, wobei Wärme aus dem zum Erzeugen des Kondensats verwendeten Kühlwasser oder Wärme aus dem Kondensat für die Erwärmung von Reinigungstanks verwendet wird.

11. Vorrichtung zum Durchführen eines Verfahrens zur direkten Erhitzung von flüssigen Lebensmittelprodukten, insbesondere nach einem der vorhergehenden Ansprüche, umfassend eine Zuführung zu einer Erhitzungsvorrichtung (2), eine Erhitzungsvorrichtung (2) zum direkten Erhitzen des Lebensmittelprodukts von der Eintrittstemperatur auf eine Behandlungstemperatur zur Ultrahocherhitzung, und einen Flash-Kühler (4) zum Flash-Kühlen des Lebensmittelprodukts von der Behandlungstemperatur auf eine Abkühltemperatur nach dem Flash-Kühlen, und eine Produktabführung vom Flash-Kühler (4), wobei die Vorrichtung des Weiteren eine Steuerung umfasst, die die Durchführung des Verfahrens so steuert, dass die Abkühltemperatur oberhalb der Eintrittstemperatur liegt.

12. Vorrichtung nach Anspruch 11, wobei die Vorrichtung einen Kreislauf (6) zur Wärmerückgewinnung umfasst, der zur Wärmerückgewinnung von der Produktabführung und Überführung der Wärme in die Produktzuführung angeordnet ist, wobei in dem Kreislauf (6) optional ein Kühler (6d) zur Kühlung des Kreislaufmediums auf dem Weg von der Produktzuführung zur Produktabführung und/oder optional ein Kühler (6c) zur Kühlung des Kreislaufmediums auf dem Weg von der Produktabführung zur Produktzuführung angeordnet ist.

13. Vorrichtung nach Anspruch 11 oder Anspruch 12, umfassend einen Kondensator (5) zum Kondensieren des Flash-Dampfes, wobei die Vorrichtung so ausgebildet ist, dass Wärme vom Lebensmittelprodukt nach dem Flash-Kühlen oder vom Kondensator oder Kondensat zwischengespeichert wird zur späteren Verwendung, insbesondere in einem optional von der Vorrichtung umfassten Wärmespeicher.

14. Vorrichtung nach einem der Ansprüche 10 bis 13, umfassend des Weiteren eine Wärmepumpe, die insbesondere dazu ausgebildet und angeordnet ist, Wärme vom Flash-Kühlen auf eine höhere Temperatur zu bringen, insbesondere eine höhere Temperatur als die Abkühltemperatur.

15. Vorrichtung nach Anspruch 13 oder 14, umfassend des Weiteren einen oder mehrere Tanks (8a, 8b, 8c) eines Reinigungssystems (8), wobei die Vorrichtung optional ein Verbindungsmittel umfasst, mit dem Kondensat aus dem Kondensator in einen oder mehrere Tanks geführt werden kann und/oder ein Verbindungsmittel, das eine Wärmerückgewinnung von dem Kondensator, insbesondere mittels des Kühlwassers, das das Kondensat kühlt, und/oder aus dem Kondensat und Übertrag der Wärme an einen oder mehrere Tanks ermöglicht.

16. Abfüllanlage zum Abfüllen von einem flüssigen Lebensmittelprodukt, umfassend einen Abfüller für ein fertiges Lebensmittelprodukt sowie eine dem Abfüller vorgelagerte Vorrichtung nach einem der Ansprüche 11 - 15.
